(19) Europäisches Patentamt
European Patent Office
Office européen des brevets

(11) **EP 3 764 298 A1**

(12) **EUROPÄISCHE PATENTANMELDUNG**

(43) Veröffentlichungstag:
**13.01.2021   Patentblatt 2021/02**

(21) Anmeldenummer: **20181584.2**

(22) Anmeldetag: **23.06.2020**

(51) Int Cl.:
**G06Q 10/06** *(2012.01)*    **G06Q 50/04** *(2012.01)*
**G05B 19/418** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **12.07.2019   AT 5011919 U**

(71) Anmelder: **Siemens AG Österreich**
**1210 Wien (AT)**

(72) Erfinder:
• **Haselböck, Alois**
**3392 Schönbühel-Aggsbach (AT)**
• **Schenner, Gottfried**
**1200 Wien (AT)**

(74) Vertreter: **Maier, Daniel Oliver**
**Siemens AG**
**Postfach 22 16 34**
**80506 München (DE)**

(54) **VERFAHREN ZUR ÄNDERUNGSKONFIGURATION EINER PRODUKTIONSANLAGE UND/ODER EINES PRODUKTS UND VERFAHREN ZUR HERSTELLUNG EINES PRODUKTS, SOWIE KONFIGURATIONSVORRICHTUNG UND SYSTEM**

(57)    Verfahren zur Änderungskonfiguration einer Produktionsanlage und/oder eines Produkts nach einer Erstkonfiguration, wobei folgende Schritte ausgeführt werden:

a) Festlegen einer ersten Variablen-Menge (V), einer Domänen-Menge (D) und einer Anforderungs-Menge (C) aus der Erstkonfiguration,

b) Erstes Zuordnen einer Zuordnungs-Menge (A) mit Zuordnungs-Tupeln (T),

bl) Drittes Erfassen einer Alt-Zuordnungs-Menge (A_legacy),

c) Zweites Zuordnen einer zweiten Variablen-Menge (Vu),

d) Erstes Erfassen der Zuordnungs-Menge (A),

e) Zweites Erfassen der zweiten Variablen-Menge (Vu),

f) Festlegen einer dritten Variablen-Menge (V) aus der Summe einer Variablen-Menge der Zuordnungs-Menge (A) und der zweiten Variablen-Menge (Vu),

g) Prüfen, ob die Zuordnungs-Menge (A) vollständig ist, und falls vollständig, Ausgeben der Zuordnungs-Menge (A) als Änderungskonfiguration,

h) Beliebiges Auswählen und Entfernen der Variablen (v) aus der ersten Variablen-Menge (Vu),

hl) Prüfen, ob die Variable (v) in der Alt-Zuordnungs-Menge (A_legacy) enthalten ist, und falls enthalten, Festlegen einer Domäne (d), sonst, Festlegen der Domäne (d) mit dem Wert Null,

i) Ausführen für alle Domänen der Domänen-Menge (D), falls die festgelegte Domäne (d) nicht Null ist:

i1) Hinzufügen des Zuordnungs-Tupels zur Zuordnungs-Menge (A),

i2) Bestimmen eines Ergebnisses durch rekursives Fortfahren mit Schritt d) mit der Zuordnungs-Menge (A) als ersten und der ersten Variablen-Menge (Vu) als zweiten Übergabeparameter,

i3) Prüfen, ob das Ergebnis eine Fehlermeldung liefert, und falls eine Fehlermeldung vorliegt, rekursives Rückgeben des Ergebnisses, sonst, Entfernen des Tupels von der Menge von Zuordnungen (A),

j) Ausgeben der Fehlermeldung.

FIG 3

```
replay-based-backtracking (A, A_legacy, Vu)
   // vars (A) + Vu == V
   // A is the set of already made assignments
   // A_legacy is a set of legacy assignments
   // Vu is the set of yet unassigned variables
if A is complete then
   return A // solution!
choose and remove a variable v from Vu
if v is in vars (A_legacy) then
   d := A_legacy (v)
else
   d := null
for all values x from D(v) preferring d if d != null do
   if (v, x) is consistent with A according to the constraints then
      add (v, x) to A
      result := replay-based-backtracking (A, A_legacy, Vu)
      if result != failure then
         return result
      remove (v, x) from A
return failure
```

**EP 3 764 298 A1**

## Beschreibung

Die Erfindung betrifft ein Verfahren zur Änderungskonfiguration einer Produktionsanlage und/oder eines Produkts nach einer Erstkonfiguration.

Die Erfindung betrifft auch ein Verfahren zur Herstellung eines Produkts mit einer Produktionsanlage mittels einer Änderungskonfiguration der Produktionsanlage und/oder des Produkts nach einer Erstkonfiguration,

Ferner betrifft die Erfindung eine Konfigurationsvorrichtung zur Änderungskonfiguration einer Produktionsanlage und/oder eines Produkts nach einer Erstkonfiguration.

Außerdem betrifft die Erfindung ein System zur Herstellung eines Produkts durch eine Produktionsanlage mittels einer Änderungskonfiguration der Produktionsanlage und/oder des Produkts nach einer Erstkonfiguration.

Eine Digitalisierung in Fabriken soll eine "intelligente Produktion" (englisch "smart production") ermöglichen, welche darauf abzielt, Produktionsprozesse zu flexibilisieren und Ressourcen effizienter einzusetzen. Dies soll durch "intelligente Produkte" (englisch "smart products") und "intelligente Fabriken" (englisch "smart factories") ermöglicht werden.

Aus Sicht der Produktlinienentwicklung können diese als zwei Produktlinien angesehen werden: Produktlinie der Produkte und Produktlinie der Produktionsanlagen. Letzteres betrifft die intelligente Verwaltung von Fabriken, um selbstorganisierende Produktionsanlagen bereitzustellen. Wenn ein Kunde sein Produkt konfiguriert, wie beispielsweise über ein webbasiertes Konfigurations-Werkzeug, ist das Ergebnis nicht nur eine detaillierte Spezifikation des Produkts, sondern eine Reihe von Anforderungen an die Smart Factory, um diese Produktinstanz erstellen zu können.

Produktionsanlagen sind im Ökosystem der intelligenten Produktion auch Ressourcen, die auf dem Markt angeboten und als Dienstleistung verkauft werden können. Das heißt, Fabriken der Zukunft präsentieren ihre Fähigkeiten potenziellen Kunden und bieten sie auf einem Markt an. Produktbesitzer (Designer oder Verkäufer) können ihre Produktionsanforderungen an die Fähigkeiten der Fabriken anpassen und die Fabrikbesitzer können eventuell vorhandene Fabriken neu konfigurieren, um die Anforderungen der herzustellenden Produkte zu erfüllen. Eine zentrale Aufgabe ist dabei die effiziente Rekonfiguration der Hard- und Software der Produktionsanlagen.

Beispielsweise kann neben der Herstellung einer neuen, individualisierten Produktlinie eine Änderungskonfiguration einer Fabrik auch dann notwendig sein, wenn neue Produktionsanlagen (z. B. 3D-Drucker, Roboter usw.) hinzugefügt wurden, oder vorhandene Anlagen entfernt wurden, da diese veraltet oder defekt sind.

Eine Konfiguration ist die Aufgabe, eine gültige, vollständige und zweckmäßige Systemstruktur abzuleiten, die aus einer Reihe von Komponenten zusammengesetzt ist.

Anforderungs-Erfüllungsprobleme (CSP, englisch "constraint satisfaction problem") werden bereits zur Modellierung und Lösung von kombinatorischen Problemen in vielen industriellen Anwendungsbereichen, wie Konfiguration, Planung, Diagnose oder Optimierungsprobleme verwendet.

Die Begriffe "Konfiguration" und "Änderungskonfiguration" werden hier in einem sehr breiten Kontext verwendet: Als CSP wird ein Domänenspezifikation (z. B. der Komponentenkatalog für Produktionsanlagen) und ein bestimmter Satz von Fakten, wie variable Zuordnungen, und Einschränkungen angegeben, sowie das Definieren der Anforderungen für eine konkrete Probleminstanz. Die Aufgabe, eine Lösung für ein Konfigurationsproblem zu finden, besteht darin, eine Lösung für das entsprechende CSP zusammen mit den gegebenen Anforderungsfakten und -beschränkungen zu finden. Wenn dieses CSP zusammen mit Anforderungen inkonsistent ist, wird keine Lösung gefunden.

Das Änderungskonfigurations-Problem ähnelt dem Konfigurations-Problem, aber zusätzlich zu den erforderlichen Fakten beziehungsweise Einschränkungen wird eine Altsystem-Konfiguration (englisch "legacy configuration") angegeben. Diese Legacy-Konfiguration ist eine Zuweisung an alle oder eine Teilmenge der CSP-Variablen. Der interessante Fall hierbei ist, dass die Anforderungen und die Legacy-Konfiguration hinsichtlich der CSP Constraints nicht konsistent sind, das heißt es konnte keine gültige Lösung gefunden werden.

Änderungskonfiguration ist die Aufgabe, eine Änderung der alten Konfiguration zu finden, damit die Anforderungen und Einschränkungen erfüllt werden. Die neu zu konfigurierte Lösung soll dabei so nah wie möglich an der alten Konfiguration sein.

Die Definition der Qualität einer Änderungskonfiguration, das heißt wie nah eine neue Konfiguration an der alten Konfiguration ist, kann dabei etwa eine Kostenfunktionen für die verschiedenen Änderungsoperatoren verwenden. Änderungskonfiguration ist dann das Minimierungs-Problem der gesamten Änderungen beziehungsweise der entsprechenden Änderungskosten.

Standard-CSP-Techniken können nicht für die Änderungskonfiguration verwendet werden, da sie nicht mit inkonsistenten Variablenzuweisungen umgehen können.

Im Stand der Technik sind Reparatur-basierte Verfahren bekannt, welche versuchen, in Konflikt stehende Anforderungen zu finden und zu beheben, was jedoch häufig zu sehr aufwändigen Algorithmen führt.

Im Stand der Technik sind ferner Änderungskonfigurationen mittels einer Minimierung von Kosten-Funktionen bekannt, welche jedoch sehr aufwändige Modelle erfordern können und daher nicht gut skalierbar sind.

Im Stand der Technik sind außerdem Reparatur-basierte, lokale Suchverfahren (heuristische) bekannt, welche versuchen, Lösungen mittel nach einer Hill-Climbing-Manier zu finden, wie beispielsweise "greedy search" Verfahren. Jedoch sind die Ergebnisse diese Verfahren oft nicht gut vorhersagbar, da die Gefahr eines lokalen Optimums besteht.

Ferner sind Regel-basierte Verfahren bekannt, welche ein Modell der Anlage und des Produkts bilden. Dabei wird eine explizit inkonsistente Lösung in eine explizit konsistente Lösung übergeführt. Es ist klar, dass ein derartiges Verfahren meist sehr unflexibel ist.

Es kann folglich schwierig und sehr aufwändig sein, in einer flexiblen Produkt- beziehungsweise Produktions-Umgebung eine Änderungskonfiguration für ein bestimmtes Produkt und die dazugehörige Produktionsanlage zu bestimmen und durchzuführen.

Es ist Aufgabe der Erfindung die genannten Nachteile zu überwinden und eine dementsprechende Konfiguration eines Produkts und einer dazugehörigen Produktionsanlage auf einfache Weise zu bestimmen und durchzuführen.

Die Erfindung löst die Aufgabe durch ein Verfahren zur Änderungskonfiguration einer Produktionsanlage und/oder eines Produkts nach einer Erstkonfiguration, wobei folgende Schritte ausgeführt werden:

    a) Festlegen einer ersten Variablen-Menge, einer Domänen-Menge und einer Anforderungs-Menge aus der Erstkonfiguration,

    b) Erstes Zuordnen einer Zuordnungs-Menge mit Zuordnungs-Tupeln, welche jeweils eine Zuordnung zwischen einer Variable der Variablen-Menge und einer Domäne der Domänen-Menge für die Variable aufweisen, aus der Erstkonfiguration,

    c) Zweites Zuordnen einer zweiten Variablen-Menge, welche noch nicht zugewiesene Variablen umfasst, aus der Änderungskonfiguration,

    d) Erstes Erfassen der Zuordnungs-Menge aus einem ersten Übergabeparameter beim Ausführen des Schritts b),

    e) Zweites Erfassen der zweiten Variablen-Menge aus einem zweiten Übergabeparameter beim Ausführen des Schritts c),

    f) Festlegen einer dritten Variablen-Menge aus der Summe einer Variablen-Menge der Zuordnungs-Menge und der zweiten Variablen-Menge,

    g) Prüfen, ob die Zuordnungs-Menge vollständig ist, und falls vollständig, Ausgeben der Zuordnungs-Menge als Änderungskonfiguration der Produktionsanlage und/oder des Produkts,

    h) Beliebiges Auswählen und Entfernen der Variablen aus der ersten Variablen-Menge,

    i) Ausführen für alle Werte jener Domäne aus der Domänen-Menge, welche der Variable entspricht und Prüfen, ob das Zuordnungs-Tupel für die Variable und die Werte der Domäne, mit der Zuordnungs-Menge gemäß der jeweiligen Anforderung konsistent ist, und falls konsistent:

        i1) Hinzufügen des Zuordnungs-Tupels zur Zuordnungs-Menge,

        i2) Bestimmen eines Ergebnisses durch rekursives Fortfahren mit Schritt d) mit der Zuordnungs-Menge als ersten und der ersten Variablen-Menge als zweiten Übergabeparameter,

        i3) Prüfen, ob das Ergebnis eine Fehlermeldung liefert, und falls eine Fehlermeldung vorliegt, rekursives Rückgeben des Ergebnisses, sonst, Entfernen des Tupels von der Menge von Zuordnungen,

    j) Ausgeben der Fehlermeldung,
    wobei
    nach dem Schritt b) folgender Schritt ausgeführt wird:
    b1) Drittes Erfassen einer Alt-Zuordnungs-Menge mit jeweiligen Tupeln,
    und nach dem Schritt h) folgender Schritt ausgeführt wird:
    h1) Prüfen, ob die Variable in der Alt-Zuordnungs-Menge enthalten ist, und falls enthalten, Festlegen einer Domäne aus der Domänen-Menge für die Variable aus der Alt-Zuordnungs-Menge, sonst, Festlegen der Domäne mit dem Wert Null,
    sowie der Schritt i) durch folgenden Schritt ersetzt wird:
    i0) Ausführen für alle Domänen der Domänen-Menge, wobei die festgelegte Domäne bevorzugt verwendet wird, falls die festgelegte Domäne nicht Null ist, und die Schritte i1), i2) und i3) ausgeführt werden.

Unter einer Domäne wird im vorliegenden Zusammenhang ein Wertebereich verstanden.

Konsistenz- oder Suchalgorithmen, wie Backtracking, können sofort ein Fehlerergebnis liefern, wenn mit einem inkonsistenten Status begonnen wird. Backtracking ist ein bekanntes Suchschema zur Lösung von CSP.

Die Erfindung erlaubt durch eine Adaptierung einer Standard-"Backtracking"-Suchprozedur eine schnelle und leichte Änderungskonfiguration eines Produkts und dessen Produktionsanlage.

Ein Constraint-Erfüllungsproblem (CSP) umfasst eine Menge von Variablen $V = \{v_1, v_2, ..., v_n\}$, ihren entsprechenden Domänen $D = \{d_1, d_2, ..., d_n\}$ und eine Menge von Constraints $C = \{c_1, c_2, ..., c_m\}$, das heißt Einschränkung der Werte, welche Variablen gleichzeitig annehmen dürfen.

Eine Lösung für ein CSP besteht darin, jeder Variablen einen entsprechenden Wert zuzuweisen, wobei alle Bedingungen erfüllt sind.

Einer der Hauptansätze bei der Suche nach einer Lösung ist das "Backtracking", welches eine Tiefensuche ist, bei der in jedem Schritt eine noch nicht zugewiesene Variable und ein Wert für diese Variable ausgewählt werden. Verstößt die aktuelle Zuweisungsmenge gegen mindestens eine Einschränkung, ist eine Sackgasse erreicht und die Prozedur versucht einen anderen Wert für die aktuelle Variable oder kehrt, falls dies nicht mehr möglich ist, zur vorherigen Variablen zurück. Wenn alle Variablen zugewiesen sind und alle Bedingungen erfüllt sind, wird eine Lösung gefunden. Das Backtracking ist in dem Sinne vollständig, dass garantiert wird, dass eine Lösung gefunden wird, wenn das Problem eine Lösung hat, und ein "Fehler" ausgegeben wird, wenn das Problem überhaupt keine Lösung hat.

Ein CSP kann durch ein Tripel $(V,D,C)$ beschrieben werden.

Eine Zuordnung ist ein Tupel $(v,d)$ mit $v \in V$ und $d \in D(v)$, das heißt eine Zuordnung des Werts $d$ zur Variablen $v$ dar.

Die Menge von Variablen $var(A)$ in der Menge von Zuordnungen $A$ ist:

$$A: vars(A) = \{v \mid (v, d) \in A\}$$

Die Menge der Variablen $vars(A_1,A_2)$ sowohl in der Menge $A_1$ als auch in der Menge $A_2$ ist:

$$A_2: vars(A_1, A_2) = \{v \mid v \in vars(A_1), v \in vars(A_2)\}$$

Die Anzahl der Zuordnungen $diff(A_1,A_2)$ mit unterschiedlichen Werten für die gemeinsamen Variablen in $A_1$ und $A_2$ ist definiert durch:

$$diff(A_1, A_2) = |\{v \mid \in vars(A_1, A_2), (v, d_1) \in A_1, (v, d_2) \in A_2, d_1 \neq d_2\}|$$

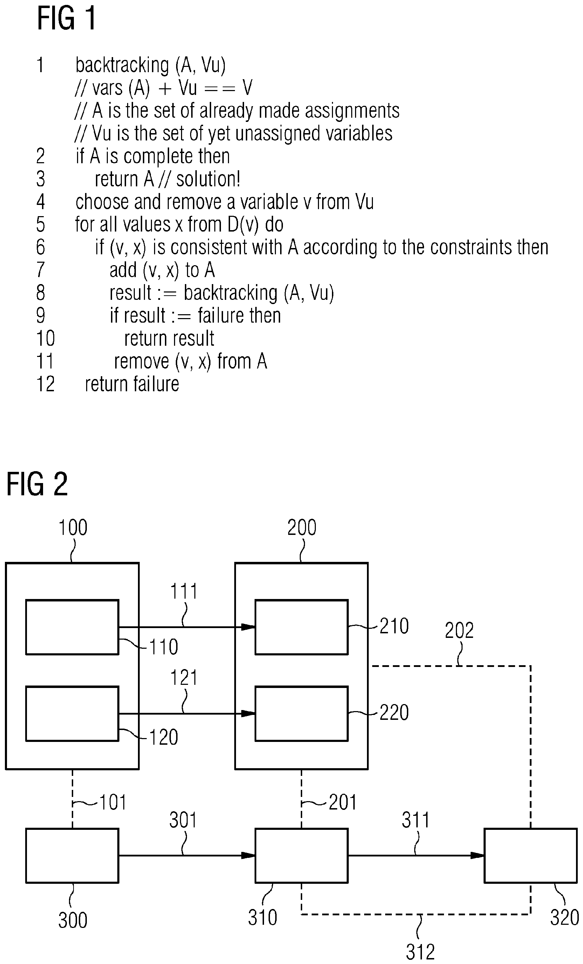

Um das CSP $(V,D,C)$ zu lösen wird ein Suchverfahren gemäß Fig. 1 aufgerufen mit:

$$backtracking(\{\}, V)$$

Wobei das Ergebnis entweder "Fehler" (englisch "failure") ist, falls keine Lösung gefunden wurde, oder eine vollständige, konsistente Zuordnungsmenge für die Variable $V$ ist.

Die Prozedur der Fig. 1 weist zwei Auswahlpunkte auf:

1. Wählen der nächsten Variablen für die Zuweisung (Zeile 4), und
2. wählen des nächsten Werts für die aktuelle Variable (Zeile 5).

Im Stand der Technik wurden verschiedene Heuristiken entwickelt, um die beste Variablen- und Wertereihenfolge für diese Auswahlpunkte zu finden, was jedoch mit erheblichem Aufwand verbunden ist. Die Erfindung bedeutet demgegenüber eine Variation des Backtracking-Verfahrens der Zeilen 4 und 5 in der Fig. 1.

Die Erfindung beschreibt eine neuartige Heuristik zur Adaptierung bekannter Backtracking-Verfahren und erlaubt ein effizientes Ermitteln einer Lösung für eine Änderungskonfiguration, insbesondere für eine große Anzahl an Variablen.

Das Verfahren ist "leicht-gewichtig", das heißt es sind keine zusätzlichen Modellierungs-Konzepte, wie Kosten-Funktionen notwendig. Ferner liefert das Verfahren bei nahezu gleicher eingesetzter Leistung deutlich bessere Ergebnisse als gewöhnliche Backtracking-Verfahren.

Obwohl das Verfahren nicht absolut sicherstellen kann, dass eine optimale Lösung hinsichtlich einer minimalen Distanz zu einer "Legacy"-Zuordnungs-Lösung gefunden wird, hat es sich jedoch gezeigt, dass das Verfahren häufig eine optimale Lösung liefert, insbesondere konnte das für kleine Problemgrößen gezeigt werden.

Eine Änderungskonfiguration $A'$ ist, ausgehend von einem CSP $(V,D,C)$, wobei $A$ eine Zuordnung von

$$V_1 \sqsubseteq V$$

ist, und *A* potentiell nicht konsistent bezüglich der Constraints *C* ist, eine konsistente Zuordnung von den Variablen *V*, das heißt *A'* ist eine Lösung des entsprechenden CSP, welches *diff(A,A')* minimiert.

Mit anderen Worten ist eine Änderungskonfiguration eine Lösung eines CSP, welche zu einer gegebenen Alt-Konfiguration (englisch "legacy configuration") so nahe als möglich kommt, wobei die Alt-Konfiguration als potentiell inkonsistente Zuordnung zu den Variablen **V** oder einer Teilmenge von **V** darstellbar ist.

Im folgenden Ansatz wird keine Kostenfunktionen für ein Änderungskonfigurations-Problem verwendet, sondern auf eine heuristische und einfache Definition der Minimalität aufgebaut: Die Anzahl der Variablenzuweisungen in der rekonfigurierten CSP-Lösung, die sich von den Zuweisungen in der Legacy-Konfiguration unterscheiden, sollte so klein wie möglich sein.

Die Erfindung löst die Aufgabe auch durch ein Verfahren zur Herstellung eines Produkts mit einer Produktionsanlage mittels einer Änderungskonfiguration der Produktionsanlage und/oder des Produkts nach einer Erstkonfiguration, wobei die Produktionsanlage und/oder das Produkt durch die erfindungsgemäßen Verfahrensschritte neu konfiguriert wird und das Produkt durch die Produktionsanlage hergestellt wird.

Die Erfindung löst die Aufgabe auch durch ein Konfigurationsvorrichtung zur Änderungskonfiguration einer Produktionsanlage und/oder eines Produkts nach einer Erstkonfiguration, wobei die Konfigurationsvorrichtung dazu eingerichtet ist, die Produktionsanlage und/oder das Produkt mit den erfindungsgemäßen Verfahrensschritten neu zu konfigurieren.

Die Erfindung löst die Aufgabe auch durch ein System zur Herstellung eines Produkts durch eine Produktionsanlage mittels einer Änderungskonfiguration der Produktionsanlage und/oder des Produkts nach einer Erstkonfiguration, umfassend eine erfindungsgemäße Konfigurationsvorrichtung und die Produktionsanlage, wobei das System dazu eingerichtet ist, die Produktionsanlage und/oder das Produkt mit der Konfigurationsvorrichtung neu zu konfigurieren und das Produkt durch die Produktionsanlage herzustellen.

Die Erfindung wird nachfolgend anhand eines in den beigeschlossenen Zeichnungen dargestellten Ausführungsbeispiels näher erläutert. In den Zeichnungen zeigt:

Fig. 1    einen Pseudocode als ein Ausführungsbeispiel für ein Backtracking-Verfahren nach dem Stand der Technik,

Fig. 2    eine schematische Darstellung für ein Änderungskonfigurations-Problem mit einer werkseitigen Erstkonfiguration,

Fig. 3    einen Pseudocode als Ausführungsbeispiel der Erfindung in Form eines Backtracking-Verfahrens,

Fig. 4    eine Vergleichs-Darstellung der Komplexität von Lösungsverfahren für Konfigurations-Probleme,

Fig. 5    eine Vergleichs-Darstellung der Lösungszeit von Lösungsverfahren für Konfigurations-Probleme.

In **Fig. 2** ist ein Szenario dargestellt, in welchem ein Änderungskonfigurations-Problem mit einer werkseitigen Konfiguration vorliegt.

Eine Produktionsanlage 100 kann über eine Erst-Spezifikation 110 der Produktionsanlage 100 in Form eines Problem-Domänen-Modells beschrieben werden, mit dem CSP

$$(V_r \cup V_c, D, C_1)$$

wobei $C_1$ die Anforderungsmenge ist.

Variable in einer Werkskonfiguration können in Anforderungsvariablen $V_r$ und Konfigurationsvariablen $V_c$ unterteilt werden.

Die Anforderungsvariablen $V_r$ bezeichnen dabei die Anforderungen an eine Produktionsanlage.

Die Konfigurationsvariablen $V_c$ bezeichnen dabei die Anforderungen an das Produkt.

Es gibt der Zusammenhang:

$$V_c : V = V_r \cup V_c$$

Die Produktionsanlage 100 kann über eine Konfiguration 120 in Form eines Problem-Instanzen-Modells beschrieben werden.

Daraus kann ein Konfigurations-Modell 300 abgeleitet werden.

Die Erst-Spezifikation 110 und die Erst-Konfiguration 120 sind zueinander konsistent 101. Es ist auch möglich, dass nur eine teilweise Konsistenz vorliegt. Es gilt mit der Erst-Konfiguration 120 ($A_1$) das Konfigurations-Modell 300 mit:

$$vars(A_1) \sqsubseteq V$$

$$V_r \sqsubseteq vars(A_1)$$

Beispielsweise führen Änderungen in der Produktionsanlage 100 und/oder des Produkts hinsichtlich der Anforderungsmenge $C_1$ zu einer neuen Anforderungsmenge $C_2$ zu Spezifikations-Änderungen 111 und hinsichtlich der Konfiguration $A_1$ zu einer Konfiguration $A_2$ Konfigurations-Änderungen 121.

Eine modifizierte Produktionsanlage 200 kann über eine Neu-Spezifikation 210 der Produktionsanlage 200 in Form eines Problem-Domänen-Modells beschrieben werden.

Ein neues CSP ist bestimmt durch

$$(V_r \cup V_c, D, C_2)$$

wobei $C_2$ die neue Anforderungsmenge ist.

Es gilt für eine Neu-Konfiguration 220 ($A_2$) das Konfigurations-Modell 310 mit:

$$vars(A_2) \sqsubseteq V$$

$$V_r \sqsubseteq vars(A_2)$$

Die Produktionsanlage 200 kann über eine Konfiguration 220 in Form eines Problem-Instanzen-Modells beschrieben werden.

Daraus kann ein Konfigurations-Modell 310 abgeleitet werden.

Die Neu-Spezifikation 210 und die Neu-Konfiguration 220 sind zueinander nicht mehr konsistent 201.

Durch das Verfahren soll eine Lösung für die Neu-Spezifikation 210 und die Neu-Konfiguration 220 gefunden werden, die einer "Legacy"-Konfiguration (im Sinne der Definition Änderungskonfiguration) möglichst nahekommt.

Es gilt für die Neu-Konfiguration 220 ($A_2$') das Konfigurations-Modell 320 mit:

$$vars(A_2') = V$$

Die Erst-Konfiguration 120 umfasst die Anforderungsvariablen $V_r$. Die Lösung soll ebenfalls die Anforderungsvariablen $\boldsymbol{V_r}$ Umfassen.

Dies kann bei der Änderungskonfigurations-Lösung leicht erreicht werden, indem die Anforderungsvariablen $v_r$ auf die

Werte der Erst-Konfiguration 120 gesetzt werden, und beim Backtracking-Löser nicht mehr ändert werden.

Durch eine erfindungsgemäße Änderungskonfiguration 311 wird erreicht, dass durch Änderungen 312 wieder konsistente Beziehung 202 für ein Konfigurations-Modell 320 hergestellt wird.

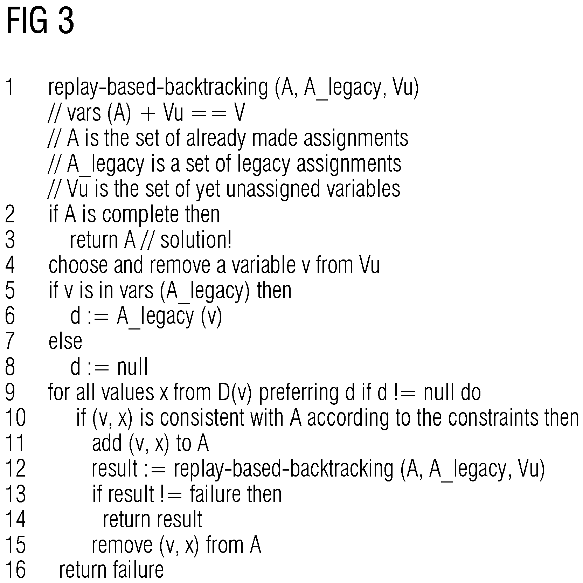

**Fig. 3** zeigt einen Pseudocode als Ausführungsbeispiel der Erfindung. Der Pseudocode beschreibt das erfindungsgemäße Verfahren zur Änderungskonfiguration einer Produktionsanlage und/oder eines Produkts nach einer Erstkonfiguration.

Dabei werden folgende Schritte ausgeführt:

a) Festlegen einer ersten Variablen-Menge V, einer Domänen-Menge D und einer Anforderungs-Menge C aus der Erstkonfiguration,
b) Erstes Zuordnen einer Zuordnungs-Menge A mit Zuordnungs-Tupeln T, welche jeweils eine Zuordnung zwischen einer Variable v der Variablen-Menge V und einer Domäne der Domänen-Menge D für die Variable v aufweisen, aus der Erst-konfiguration,

c) Zweites Zuordnen einer zweiten Variablen-Menge Vu, welche noch nicht zugewiesene Variablen umfasst, aus der Änderungskonfiguration,

d) Erstes Erfassen der Zuordnungs-Menge A aus einem ersten Übergabeparameter beim Ausführen des Schritts b),

e) Zweites Erfassen der zweiten Variablen-Menge Vu aus einem zweiten Übergabeparameter beim Ausführen des Schritts c),

f) Festlegen einer dritten Variablen-Menge V aus der Summe einer Variablen-Menge der Zuordnungs-Menge A und der zweiten Variablen-Menge Vu,

g) Prüfen, ob die Zuordnungs-Menge A vollständig ist, und falls vollständig, Ausgeben der Zuordnungs-Menge A als Änderungskonfiguration der Produktionsanlage und/oder des Produkts,

h) Beliebiges Auswählen und Entfernen der Variablen v aus der ersten Variablen-Menge Vu,

i) Ausführen für alle Werte jener Domäne aus der Domänen-Menge, welche der Variable v entspricht und Prüfen, ob das Zuordnungs-Tupel T für die Variable v und die Werte der Domäne, mit der Zuordnungs-Menge gemäß der jeweiligen Anforderung c konsistent ist, und falls konsistent:

i1) Hinzufügen des Zuordnungs-Tupels zur Zuordnungs-Menge A,

i2) Bestimmen eines Ergebnisses durch rekursives Fortfahren mit Schritt d) mit der Zuordnungs-Menge A als ersten und der ersten Variablen-Menge Vu als zweiten Übergabeparameter,

i3) Prüfen, ob das Ergebnis eine Fehlermeldung liefert, und falls eine Fehlermeldung vorliegt, rekursives Rückgeben des Ergebnisses, sonst, Entfernen des Tupels von der Menge von Zuordnungen A,

j) Ausgeben der Fehlermeldung
wobei
nach dem Schritt b) folgender Schritt ausgeführt wird:

b1) Drittes Erfassen einer Alt-Zuordnungs-Menge A_legacy mit jeweiligen Tupeln T_legacy,
und nach dem Schritt h) folgender Schritt ausgeführt wird:

h1) Prüfen, ob die Variable v in der Alt-Zuordnungs-Menge A_legacy enthalten ist, und falls enthalten, Festlegen einer Domäne d aus der Domänen-Menge D für die Variable v aus der Alt-Zuordnungs-Menge A_legacy, sonst, Festlegen der Domäne d mit dem Wert Null,

sowie der Schritt i) durch folgenden Schritt ersetzt wird:

i0) Ausführen für alle Domänen der Domänen-Menge D, wobei die festgelegte Domäne d bevorzugt verwendet wird, falls die festgelegte Domäne d nicht Null ist, und die Schritte i1), i2) und i3) ausgeführt werden.

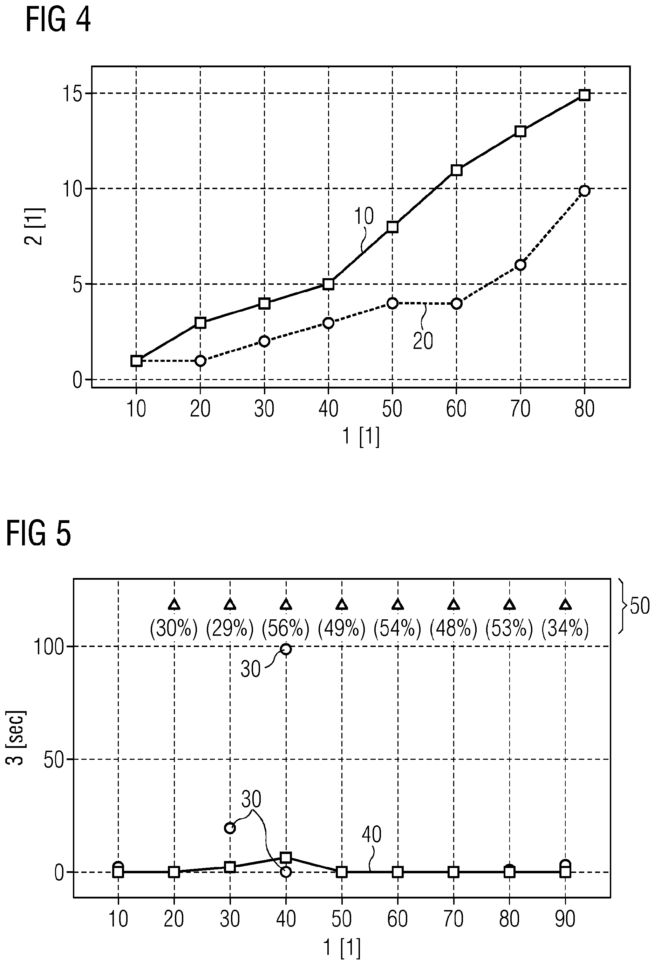

**Fig. 4** zeigt eine Vergleichs-Darstellung der Komplexität von Lösungsverfahren für Konfigurations-Probleme.
Eine Problemgröße 1 mit einer Anzahl an Eingangselementen bildet die x-Achse der Darstellung und eine Anzahl 2 an geänderten Variablen (Mittelwert) die y-Achse.
Es ist erkennbar, dass ein alternatives ASP-Lösungsverfahren 10 ("answer set programming") häufiger eine Lösung findet, als ein erfindungsgemäßes CSP-Lösungsverfahren 20.
**Fig. 5** zeigt eine Vergleichs-Darstellung der Lösungszeit von Lösungsverfahren für Konfigurations-Probleme, wobei die Zeiten für zufällig erzeugte Änderungskonfigurations-Probleme ermittelt wurden.
Eine Problemgröße 1 mit einer Anzahl an Eingangselementen bildet die x-Achse der Darstellung und die Zeit 3 zur Bestimmung einer Lösung die y-Achse.
Es sind Datenpunkte 30, eine Mittelwert-Funktion 40 und Zeitüberschreitungen 50 (Timeout) erkennbar.
CSP-basierte Lösungen können sehr schnell gefunden werden und sind daher für große Probleme geeignet.
Dabei ist es entscheidend, welche Variablen und Heuristiken angewendet werden. Falls ungünstige Heuristiken zur Anwendung kommen, liefern bekannte Verfahren keine Ergebnisse in der vorgesehenen Zeit und bei vorgegebenen Zeitüberschreitungen 50 wird das Verfahren abgebrochen.
Beim erfindungsgemäßen Verfahren können in deutlich mehr Fällen in sehr kurzer Zeit Lösungen für die Änderungskonfiguration gefunden werden, wie aus den Datenpunkten 30 und der Mittelwert-Funktion 40 ablesbar ist.
Ein Verfahren zur Herstellung eines Produkts mit einer Produktionsanlage mittels einer Änderungskonfiguration der Produktionsanlage und/oder des Produkts nach einer Erstkonfiguration ist in den Figuren nicht gesondert dargestellt.
Die Produktionsanlage und/oder das Produkt wird/werden dabei durch die erfindungsgemäßen Verfahrensschritte neu konfiguriert.
Das Produkt wird anschließend durch die Produktionsanlage hergestellt.
Eine Konfigurationsvorrichtung zur Änderungskonfiguration einer Produktionsanlage und/oder eines Produkts nach einer Erstkonfiguration ist in den Figuren nicht gesondert dargestellt.
Die Konfigurationsvorrichtung ist dazu eingerichtet, die Produktionsanlage und/oder das Produkt mit den erfindungsgemäßen Verfahrensschritten neu zu konfigurieren.

# EP 3 764 298 A1

Ein System zur Herstellung eines Produkts durch eine Produktionsanlage mittels einer Änderungskonfiguration der Produktionsanlage und/oder des Produkts nach einer Erstkonfiguration ist in den Figuren nicht gesondert dargestellt.

Das System umfasst eine erfindungsgemäße Konfigurationsvorrichtung und die Produktionsanlage.

Das System ist dazu eingerichtet, die Produktionsanlage und/oder das Produkt mit der erfindungsgemäßen Konfigurationsvorrichtung neu zu konfigurieren.

Das System ist ferner dazu eingerichtet, das Produkt durch die Produktionsanlage herzustellen.

**Bezugszeichenliste:**

| | |
|---|---|
| 1 | Problemgröße in Anzahl der Eingangselemente |
| 2 | Anzahl an geänderten Variablen (Mittelwert) |
| 3 | Zeit zur Bestimmung einer Lösung |
| 10 | ASP |
| 20 | CSP |
| 30 | Datenpunkt |
| 40 | Mittelwert |
| 50 | Zeitüberschreitung, Timeout |
| 100, 200 | Produktionsanlage |
| 110, 210 | Produktionsanlage Spezifikation, Problemdomänen-Modell |
| 120, 220 | Produktionsanlage Konfiguration, Probleminstanz-Modell |
| 111 | Änderung Spezifikation |
| 121 | Änderung Konfiguration |
| 300, 310, 320 | Konfigurations-Modell |
| 101, 202 | konsistent |
| 201 | inkonsistent |
| 311 | Änderungsukonfiguration |
| 312 | Änderungen |
| A, A_legacy | Zuordnungs-Menge |
| c | Anforderung |
| C | Anforderungs-Menge |
| d | Domäne |
| D | Domänen-Menge |
| T, T_legacy | Zuordnungs-Tupel |
| v | Variable |
| V, Vu | Variablen-Menge |

**Patentansprüche**

1. Verfahren zur Änderungskonfiguration einer Produktionsanlage und/oder eines Produkts nach einer Erstkonfiguration, wobei folgende Schritte ausgeführt werden:

    a) Festlegen einer ersten Variablen-Menge (V), einer Domänen-Menge (D) und einer Anforderungs-Menge (C) aus der Erstkonfiguration,
    b) Erstes Zuordnen einer Zuordnungs-Menge (A) mit Zuordnungs-Tupeln (T), welche jeweils eine Zuordnung zwischen einer Variable (v) der Variablen-Menge (V) und einer Domäne der Domänen-Menge (D) für die Variable (v) aufweisen, aus der Erstkonfiguration,
    c) Zweites Zuordnen einer zweiten Variablen-Menge (Vu), welche noch nicht zugewiesene Variablen umfasst, aus der Änderungskonfiguration,
    d) Erstes Erfassen der Zuordnungs-Menge (A) aus einem ersten Übergabeparameter beim Ausführen des Schritts b),
    e) Zweites Erfassen der zweiten Variablen-Menge (Vu) aus einem zweiten Übergabeparameter beim Ausführen des Schritts c),
    f) Festlegen einer dritten Variablen-Menge (V) aus der Summe einer Variablen-Menge der Zuordnungs-Menge (A) und der zweiten Variablen-Menge (Vu),
    g) Prüfen, ob die Zuordnungs-Menge (A) vollständig ist, und falls vollständig, Ausgeben der Zuordnungs-Menge

(A) als Änderungskonfiguration der Produktionsanlage und/oder des Produkts,

h) Beliebiges Auswählen und Entfernen der Variablen (v) aus der ersten Variablen-Menge (Vu),

i) Ausführen für alle Werte jener Domäne aus der Domänen-Menge, welche der Variable (v) entspricht und Prüfen, ob das Zuordnungs-Tupel (T) für die Variable (v) und die Werte der Domäne, mit der Zuordnungs-Menge gemäß der jeweiligen Anforderung (c) konsistent ist, und falls konsistent:

i1) Hinzufügen des Zuordnungs-Tupels zur Zuordnungs-Menge (A),

i2) Bestimmen eines Ergebnisses durch rekursives Fortfahren mit Schritt d) mit der Zuordnungs-Menge (A) als ersten und der ersten Variablen-Menge (Vu) als zweiten Übergabeparameter,

i3) Prüfen, ob das Ergebnis eine Fehlermeldung liefert, und falls eine Fehlermeldung vorliegt, rekursives Rückgeben des Ergebnisses, sonst, Entfernen des Tupels von der Menge von Zuordnungen (A),

j) Ausgeben der Fehlermeldung

wobei

nach dem Schritt b) folgender Schritt ausgeführt wird:

b1) Drittes Erfassen einer Alt-Zuordnungs-Menge (A_legacy) mit jeweiligen Tupeln (T_legacy),

und nach dem Schritt h) folgender Schritt ausgeführt wird:

h1) Prüfen, ob die Variable (v) in der Alt-Zuordnungs-Menge (A_legacy) enthalten ist, und falls enthalten, Festlegen einer Domäne (d) aus der Domänen-Menge (D) für die Variable (v) aus der Alt-Zuordnungs-Menge (A_legacy), sonst, Festlegen der Domäne (d) mit dem Wert Null,

sowie der Schritt i) durch folgenden Schritt ersetzt wird: i0)

Ausführen für alle Domänen der Domänen-Menge (D), wobei die festgelegte Domäne (d) bevorzugt verwendet wird, falls die festgelegte Domäne (d) nicht Null ist, und die Schritte i1), i2) und i3) ausgeführt werden.

2. Verfahren zur Herstellung eines Produkts mit einer Produktionsanlage mittels einer Änderungskonfiguration der Produktionsanlage und/oder des Produkts nach einer Erstkonfiguration, wobei die Produktionsanlage und/oder das Produkt durch die Verfahrensschritte nach dem vorhergehenden Anspruch neu konfiguriert wird und das Produkt durch die Produktionsanlage hergestellt wird.

3. Konfigurationsvorrichtung zur Änderungskonfiguration einer Produktionsanlage und/oder eines Produkts nach einer Erstkonfiguration, wobei die Konfigurationsvorrichtung dazu eingerichtet ist, die Produktionsanlage und/oder das Produkt mit den Verfahrensschritten nach Anspruch 1 neu zu konfigurieren.

4. System zur Herstellung eines Produkts durch eine Produktionsanlage mittels einer Änderungskonfiguration der Produktionsanlage und/oder des Produkts nach einer Erstkonfiguration, umfassend eine Konfigurationsvorrichtung nach dem vorhergehenden Anspruch und die Produktionsanlage, wobei das System dazu eingerichtet ist, die Produktionsanlage und/oder das Produkt mit der Konfigurationsvorrichtung neu zu konfigurieren und das Produkt durch die Produktionsanlage herzustellen.

# FIG 1

```
1    backtracking (A, Vu)
     // vars (A) + Vu == V
     // A is the set of already made assignments
     // Vu is the set of yet unassigned variables
2    if A is complete then
3       return A // solution!
4    choose and remove a variable v from Vu
5    for all values x from D(v) do
6        if (v, x) is consistent with A according to the constraints then
7            add (v, x) to A
8            result := backtracking (A, Vu)
9            if result := failure then
10               return result
11           remove (v, x) from A
12   return failure
```

# FIG 2

# FIG 3

```
1    replay-based-backtracking (A, A_legacy, Vu)
     // vars (A) + Vu == V
     // A is the set of already made assignments
     // A_legacy is a set of legacy assignments
     // Vu is the set of yet unassigned variables
2    if A is complete then
3       return A // solution!
4    choose and remove a variable v from Vu
5    if v is in vars (A_legacy) then
6       d := A_legacy (v)
7    else
8       d := null
9    for all values x from D(v) preferring d if d != null do
10      if (v, x) is consistent with A according to the constraints then
11         add (v, x) to A
12         result := replay-based-backtracking (A, A_legacy, Vu)
13         if result != failure then
14            return result
15         remove (v, x) from A
16   return failure
```

FIG 4

FIG 5

**Europäisches Patentamt**
**European Patent Office**
**Office européen des brevets**

**EUROPÄISCHER RECHERCHENBERICHT**

**Nummer der Anmeldung**

EP 20 18 1584

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | HASELBÖCK ET AL: "A Heuristic, Replay-based Approach for Reconfiguration", PROCEEDINGS OF THE 17TH INTERNATIONAL CONFIGURATION WORKSHOP, 10. September 2015 (2015-09-10), Seiten 73-80, XP055715426, Vienna, Austria * das ganze Dokument * | 1-4 | INV. G06Q10/06 G06Q50/04 G05B19/418 |
| X | ZHANG L L ET AL: "Solving production reconfiguration based on constraint satisfaction", INDUSTRIAL ENGINEERING AND ENGINEERING MANAGEMENT (IEEM), 2010 IEEE INTERNATIONAL CONFERENCE ON, IEEE, PISCATAWAY, NJ, USA, 7. Dezember 2010 (2010-12-07), Seiten 1235-1239, XP031839525, ISBN: 978-1-4244-8501-7 * Zusammenfassung * | 1-4 | |
| X | BRINKER JAN ET AL: "Optimization of the Reconfiguration Planning of Cyber-Physical Production Systems with Delta-Like Architecture", 2018 INTERNATIONAL CONFERENCE ON RECONFIGURABLE MECHANISMS AND ROBOTS (REMAR), IEEE, 20. Juni 2018 (2018-06-20), Seiten 1-9, XP033394642, DOI: 10.1109/REMAR.2018.8449867 [gefunden am 2018-08-28] * Seite 1, Spalte 2, Absatz 1 * * Seite 3, Spalte 1, Absatz 2 * * Seite 6, Spalte 1, Absatz 5 * * Seite 8, Spalte 2, Absatz 3 * | 1-4 | RECHERCHIERTE SACHGEBIETE (IPC) G06Q G05B |

Der vorliegende Recherchenbericht wurde für alle Patentansprüche erstellt

| Recherchenort | Abschlußdatum der Recherche | Prüfer |
|---|---|---|
| München | 7. September 2020 | Hopper, Eva |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)